# EUROPÄISCHE PATENTSCHRIFT

(11) **EP 2 986 372 B1**
(45) Veröffentlichungstag und Bekanntmachung des Hinweises auf die Patenterteilung: **03.05.2017**
(21) Anmeldenummer: 14710817.9
(22) Anmeldetag: 17.03.2014
(51) Int. Cl.: B01J 20/281, G01N 30/93, B01J 20/10, B01J 20/28, G01N 30/92, G01N 30/95

(54) **DÜNNSCHICHTCHROMATOPRAPHIE-PLATTE, VERFAHREN ZUR HERSTELLUNG EINER SOLCHEN PLATTE, SOWIE VERFAHREN ZUR DURCHFÜHRUNG EINER DÜNNSCHICHTCHROMATOGRAPHISCHEN TRENNUNG**
THIN-LAYER CHROMATOGRAPHY PLATE, METHOD FOR PRODUCING SUCH A PLATE, AND METHOD FOR PERFORMING A THIN-LAYER CHROMATOGRAPHY SEPARATION
PLAQUE DE CHROMATOGRAPHIE SUR COUCHE MINCE, PROCÉDÉ DE FABRICATION D'UNE TELLE PLAQUE, AINSI QUE PROCÉDÉ DE RÉALISATION D'UNE SÉPARATION PAR CHROMATOGRAPHIE SUR COUCHE MINCE

(30) Priorität: 17.04.2013 EP 13002009
(43) Veröffentlichungstag der Anmeldung: 24.02.2016
(73) Patentinhaber: Merck Patent GmbH, 64293 Darmstadt (DE)
(72) Erfinder: SCHULZ, Michael, 64285 Darmstadt (DE)
(86) Internationale Anmeldenummer: PCT/EP2014/000717
(87) Internationale Veröffentlichungsnummer: WO 2014/169982

(56) Entgegenhaltungen:
- SU-A1- 1 571 496
- US-A- 3 590 006
- MAMORU TACHIKAWA ET AL: "Silacyclobutane-Functionalized Siloxane Thermosets: An Examination of Their Properties and Potential as Copper Metal Site Selective Coatings", CHEMISTRY OF MATERIALS, Bd. 10, Nr. 12, 1. Dezember 1998 (1998-12-01), Seiten 4154-4158, XP055119623, ISSN: 0897-4756, DOI: 10.1021/cm980584s
- WILSON I D ED - VEUTHEY J-L ET AL: "The state of the art in thin-layer chromatography-mass spectrometry: a critical appraisal", JOURNAL OF CHROMATOGRAPHY, ELSEVIER SCIENCE PUBLISHERS B.V, NL, Bd. 856, Nr. 1-2, 24. September 1999 (1999-09-24), Seiten 429-442, XP004180089, ISSN: 0021-9673, DOI: 10.1016/S0021-9673(99)00618-4

## Beschreibung

Die vorliegende Erfindung betrifft eine Dünnschichtchromatographieplatte, bei der der Binder zugleich funktionelle Gruppen trägt sowie ein Verfahren zu deren Herstellung.
Das Prinzip der Dünnschichtchromatographie ist dem Fachmann bekannt. Typischerweise werden kleine Volumina von verschiedenen Lösungen mit den aufzutrennenden Substanzgemischen an einer Startlinie punktförmig auf die poröse Dünnschicht aufgetragen. Der Rand der Trägerplatten unterhalb der Startlinie wird dann mit einem flüssigen Laufmittel in Kontakt gebracht, wobei das kapillare Aufsteigen des Laufmittels in der porösen Dünnschicht die einzelnen Substanzen mitnimmt. Durch verschiedene Adsorptions- oder Verteilungskoeffizienten werden die Substanzen verschieden schnell transportiert und somit getrennt. Sie befinden sich nach Herausnehmen und Trocknen der Trägerplatten über die Platte als Substanz-Zonen verteilt auf Bahnen, die jeweils im Startpunkt der Gemische beginnen und hinter der Fließmittelfront herlaufen. Es können so beispielsweise zehn bis dreißig Gemische auf einer Trägerplatte gleichzeitig getrennt werden.
Für sehr komplizierte Gemische ist auch eine zweidimensionale Dünnschichtchromatographie bekannt.
Die in der Dünnschichtchromatographie typischerweise verwendeten Sorbenzien oder Trägermaterialien, z.B. Kieselgel oder Aluminiumoxid, haben nur geringe Adhäsionseigenschaften, so dass die aus ihnen hergestellten Trennschichten mechanisch wenig widerstandsfähig sind.
Aus diesem Grund wird den Sorbenzien ein Bindemittel, auch Binder genannt, zugesetzt, das die Stabilität und Abriebfestigkeit der Trennschichten erhöht. Typischerweise handelt es sich bei diesen Bindemitteln um organische Polymere, wie beispielsweise in CH 528081 oder DE 1598382 offenbart.
Insbesondere die Verwendung von organischen Bindemitteln (z.B. hochmolekulare Polyacrylsäuren) hat sich für die industrielle Herstellung von Dünnschicht-Platten, auch TLC-Platten genannt, durchgesetzt. Diese Schichten sind im Vergleich zu reinen Sorbensschichten sehr stabil und können dadurch problemlos hergestellt und verpackt werden.
Ein großer Nachteil bei der Verwendung von Bindemitteln ist jedoch, dass sie die Trenneigenschaften der TLC-Platte beeinträchtigen können, z.B. indem sie die Oberfläche der Sorbensteilchen belegen, so dass diese nicht mehr ausreichend zugänglich sind. Zudem werden manche Bindemittel bei der Verwendung bestimmter Laufmittel gelöst.

Daher wurde in der Dünnschicht-Chromatographie bislang versucht, möglichst inerte Bindemittel zu finden, die möglichst wenig Einfluss auf das Trennverhalten des TLC-Platte nehmen.

Aus der US 3590006 sind TLC-Platten bekannt, die unter Verwendung von Kieselgel und dem Silikonlack D. C. 997 (Dow Corning 997) hergestellt werden.

Aus der SU 1571496 sind TLC-Platten bekannt, deren Sorbens-Schicht mit dem Siloxan Oligomer Octamethyltrisiloxan (((CH₃)₃Si-O-)₂Si(CH₃)₂) bedampft wurde. Wurde nun gefunden, dass im Gegensatz zu den bisherigen möglichst inerten Materialien Bindemittel mit großem Erfolg in der Dünnschichtchromatographie eingesetzt werden können, die kovalent binden und funktionelle Gruppen aufweisen, mit denen sie Einfluss auf die Trenneigenschaften der TLC-Platte nehmen können. Die beim Einsatz dieser Bindemittel erhaltene TLC-Platte weist dadurch eine Trennschicht auf, die neben dem eigentlichen Sorbens, wie z.B. funktionalisiertem Kieselgel, eine weitere Sorbens-Komponente aufweist. Diese weitere Sorbens-Komponente wirkt einerseits als Bindemittel, indem sie wie die herkömmlichen Bindemittel die mechanische Stabilität der Trennschicht erhöht, und andererseits zusätzlich als Sorbens, da sie funktionelle Gruppen aufweist, die die Auftrennung der Probensubstanzen beeinflussen. Es wurde gefunden, dass Oligo- oder Polysiloxan-Derivate für diese Zwecke besonders geeignet sind.
Gegenstand der vorliegenden Erfindung ist daher eine Dünnschichtplatte zumindest bestehend aus einem Träger und einer Sorbensschicht, wobei die Sorbensschicht zumindest ein Siloxan Oligomer enthält, das zumindest Silanolgruppen aufweist. In einer bevorzugten Ausführungsform enthält die Sorbensschicht zusätzlich anorganische und/oder organische Partikel, wie SiO₂ z.B. in Form von Kieselgel oder Kieselgur, Al₂O₃, TiO₂, Acryl- Methacryl basierte Polymere (z.B. GM/CGDMA Glycidylmethacrylat/ethlenglycoldimethacrylat oder HEMA Hydroxyethylmetacrylat), Polysaccharide (z.B. Cellulose, Agarose), hydrophile Polyvinylether (z.B. BDMVE Butandiolmonovinylether oder DVH Divinylethlenharnstoff) Partikel, bevorzugt SiO₂ Partikel.

In einer weiteren bevorzugten Ausführungsform weist das Siloxan Oligomer C1 bis C18 Alkyl-Gruppen und/oder Amino-Gruppen auf. Bevorzugt ist eine Sorbensschicht, die zumindest ein Siloxan Oligomer mit C1 bis C18 Alkyl-Gruppen und/oder Amino-Gruppen sowie anorganische und/oder organische Partikel enthält.
In einer Ausführungsform ist das Siloxan Oligomer ein Co- Kondensat aus mindestens zwei verschiedenen Silanen, bevorzugt einem wasserlöslichen und einem wasserunlöslichen Silan, wie beispielsweise einem Aminosilan und einem Alkylsilan. Bevorzugt ist eine Sorbensschicht, die zumindest ein Siloxan Oligomer enthält, das ein Co- Kondensat aus mindestens zwei verschiedenen Silanen, bevorzugt einem wasserlöslichen und einem wasserunlöslichen Silan, ist, sowie anorganische und/oder organische Partikel.

In einer bevorzugten Ausführungsform liegt die Dicke der Sorbensschicht zwischen 10 µm und 500 µm.

Gegenstand der vorliegenden Erfindung ist auch ein Verfahren zur Herstellung von Dünnschichtplatten durch
a) Bereitstellen einer Mischung, die zumindest ein Siloxan-Oligomer, das zumindest Silanolgruppen aufweist, und ein Lösungsmittel, das das Siloxan-Oligomer zumindest teilweise lösen und bei Temperaturen unter 200°C wieder vollständig entfernt werden kann, enthält
b) Aufbringen der Mischung aus Schritt a) auf einen Träger
c) Temperaturbehandlung
In einer bevorzugten Ausführungsform erfolgt die Temperaturbehandlung mittels eines Temperaturgradienten, bei dem über einen Zeitraum zwischen 30 und 200 Minuten die Temperatur kontinuierlich oder stufenweise typischerweise von Raumtemperatur auf eine Temperatur zwischen 50 und 200°C erhöht wird.
Gegenstand der vorliegenden Erfindung ist auch ein Verfahren zur Durchführung einer dünnschichtchromatographischen Trennung mit folgenden Verfahrensschritten
a) Bereitstellen einer erfindungsgemäßen Dünnschichtplatte
b) Auftragen der Proben auf die Dünnschichtplatte
c) Entwicklung der Dünnschichtplatte mit einem Laufmittel
d) Entfernung des Laufmittels
e) Auswertung der Dünnschichtplatte

In einer bevorzugten Ausführungsform erfolgt die Auswertung der Dünnschichtplatte durch Inkontaktbringen eines auszuwertenden Bereichs der Sorbensschicht mit einem Eluenten und Zuführung des Eluats in eine Auswerteeinrichtung.

In einer bevorzugten Ausführungsform ist die Auswerteeinrichtung ein Massenspektrometer.
Figur 1 zeigt zwei entwickelte Dünnschichtplatten. Dünnschichtplatte A wurde nach dem beschriebenen Verfahren hergestellt, Platte B ist eine Merck Millipore HPTLC Si60 NH₂ Platte. Weitere Einzelheiten zu Figur 1 finden sich in Beispiel 3.
Figur 2 zeigt die Aufnahme einer Dünnschichtplatte bei UV 254 nm.
Figur 3 zeigt das MS Spektrum Hydrocortison (untere Bande). Einzelheiten zu den Figuren 2 und 3 finden sich in Beispiel 4.

Eine Dünnschichtplatte ist dem Fachmann bekannt. In der Regel besteht sie aus einem Träger, beispielsweise in Form einer Glasplatte, Plastikfolie oder Aluminiumfolie, und einer Sorbensschicht.

Eine Sorbensschicht ist der Teil der Dünnschichtplatte, in dem die chromatographische Auftrennung der Probe erfolgt. Eine Sorbensschicht kann ein oder mehrere Sorbenzien enthalten. Typische Sorbenzien sind SiO₂, Aluminiumoxid, Kieselgur, Kieselgel, Cellulose oder TiO₂. Bevorzugt enthält die Sorbensschicht der erfindungsgemäßen Dünnschichtplatte SiO₂, beispielsweise in Form von Kieselgur oder Kieselgel.

Die Sorbenzien können nicht funktionalisiert oder funktionalisiert vorliegen. Die Funktionalisierung des Sorbens dient zur Einstellung bestimmter Trenneigenschaften durch Einführung bestimmter funktioneller Gruppen. Eine funktionelle Gruppe, die auch zur Einführung weiterer funktioneller Gruppen dienen kann, ist eine OH-Gruppe. Geeignete Funktionalisierungen, die die Trenneigenschaften beeinflussen, auch Separationseffektoren genannt, sind dem Fachmann bekannt. Beispiele sind ionische Gruppen für die Ionenaustauschchromatographie oder hydrophobe Gruppen für die reversed-phase-Chromatographie. Geeignete Derivatisierungsverfahren und geeignete Separationseffektoren sind dem Fachmann bekannt und in Handbüchern wie Packings and Stationary Phases in Chromatographic Techniques (K.K: Unger ed.; Marcel Dekker, New York und Basel (1990)) oder Porous Silica (K.K. Unger ed.; Elsevier, Amsterdam, Oxford, New York (1979)) beschrieben. Für Trennmittel für die Dünnschichtchromatographie sind insbesondere Derivatisierungsverfahren geeignet, wie sie in DE 27 12 113 und DE 28 09 137 offenbart sind. Bevorzugte Separationseffektoren sind
- Aminogruppen
- Aminofunktionelle Gruppen
- Alkylgruppen, insbesondere C8 und C18 Gruppen
- Diol
- Cyano
- Phenyl
- Kationentauscher wie z.B. SO₃²⁻

Aminofunktionelle Gruppen sind Alkylgruppen, die zumindest eine Aminogruppe tragen, beispielsweise Aminopropyl.

Ein Siloxan Oligomer ist erfindungsgemäß ein Siloxan Oligomer, das zumindest Silanolgruppen aufweist. Derartige Siloxan Oligomere entstehen durch Ko-Kondensation von Silanen.

Oligomere haben typischerweise 2 bis 200 Siloxan-Einheiten. Bevorzugt enthalten die Siloxan-Oligomere neben den Silanolgruppen auch weitere funktionelle Gruppen oder Separationseffektoren wie Aminogruppen, Alkylgruppen etc..
Derartige Siloxan Oligomere sind aus EP 0 675 128, EP 0 716 127 und EP 0 716 128 bekannt.

Geeignete Siloxan Oligomere sind lineare Oligomere wie solche der Formel X

R^{x}₃Si-[O-SiR^{x}₂]ₙ-O-SiR^{x}₃ X

oder verzweigte Siloxan-Oligomere, bei denen ein oder mehrere Si-Einheiten eine Verzweigungsstelle bilden. Das Beispiel einer einfach verzweigten Verbindung zeigt Formel XX 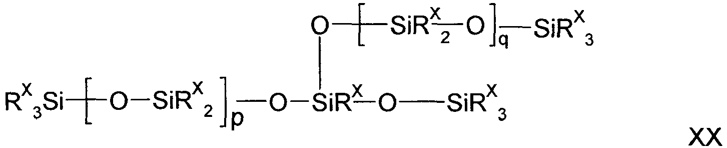 wobei in den Formeln X und XX
R^{x} jeweils unabhängig voneinander
H,
OH,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet, wobei ein oder mehrere R^{x} teilweise oder vollständig mit Halogenen, insbesondere -F und/oder -Cl, oder teilweise mit -OH, -OR', - CN, -C(O)OH, -C(O)NR'₂, -SO₂NR'₂, -C(O)X, -SO₂OH, -SO₂X, -NO₂, -NR'₂ substituiert sein können, und wobei ein oder zwei nicht benachbarte und nicht α-ständige Kohlenstoffatome des R^{x}, durch Atome und/oder Atomgruppierungen ausgewählt aus der Gruppe -O-, -S-, -S(O)-, -SO₂-, SO₂O-, -C(O)-, -C(O)O-, -N⁺R'₂-, -P(O)R'O-, -C(O)NR'-, -SO₂NR'-, - OP(O)R'O-, -P(O)(NR'₂)NR'-, -PR'₂=N- oder -P(O)R'- ersetzt sein können mit R' = H, C₁- bis C₆-Alkyl, C₃- bis C₇-Cycloalkyl, unsubstituiertes oder substituiertes Phenyl und X =Halogen sein kann und wobei 1<=n<=200, 1<= p+q<=200 und wobei
mindestens ein R^{x} = OH ist.

Erfindungsgemäß geeignete Siloxan Oligomere sind herstellbar durch Kondensation und zumindest partielle Hydrolyse von Silanen der Formel la

SiX₄ la

wobei
X unabhängig voneinander bevorzugt sein können
- OR^{a}
- Halogen, insbesondere Cl, Br, I
- Imidazol
- N(R°)₂
worin R^{a} ein C1 bis C8 Alkyl Rest ist, insbesondere methyl, ethyl oder isopropyl und
R° methyl, ethyl oder isopropyl ist.

Weitere geeignete Siloxan Oligomere sind herstellbar durch Mischen wasserlöslicher Aminoalkylalkoxysilane der allgemeinen Formel I

R-Si(R¹)_{y}(OR^{1*})_{3-y} I

vorzugsweise Aminopropyltriethoxysilan, Aminopropylmethyldiethoxysilan, Aminopropyltrimethoxysilan oder Aminopropylmethyldimethoxysilan,
mit nicht wasserlöslichen Alkyltrialkoxysilanen der allgemeinen Formel IIa

R² - Si (OR^{1**})₃ IIa

vorzugsweise Propyltrimethoxysilan, Propyltriethoxysilan, Methyltriethoxysilan, Methyltrimethoxysilan, Ethyltrimethoxysilan, Ethyltriethoxysilan, Isobutyltrimethoxysilan oder Isobutyltriethoxysilan,
und/oder nicht wasserlöslichen Dialkyldialkoxysilanen der allgemeinen Formel III

AA' - Si (OR^{1***})₂ III

vorzugsweise Dimethyldimethoxysilan, Dimethyldiethoxysilan, Methylpropyldimethoxysilan oder Methylpropyldiethoxysilan,
und/oder Mischungen aus nicht wasserlöslichen Alkyltrialkoxysilanen und Dialkyldialkoxysilanen der allgemeinen Formeln IIa und III,
wobei R eine aminofunktionelle organische Gruppe ist,
R¹, R^{1*}, R^{1**} und R^{1***} einen Methyl- oder Ethyl-Rest,
R² einen linearen oder cyclischen oder verzweigten Alkyl-Rest mit 1 bis 18 C-Atomen,
A einen unverzweigten oder verzweigten Alkyl-Rest mit 1 bis 3 C-Atomen und
A' einen unverzweigten oder verzweigten Alkyl-Rest mit 1 bis 3 C-Atomen darstellen und 0 <= y <= 1 ist,
Versetzen des Gemisches mit Wasser und Einstellen des pH-Wertes der Reaktionsmischung auf einen Wert zwischen 1 und 8 und Entfernen des bereits vorhandenen und/oder bei der Umsetzung entstandenen Alkohols.

Siloxan Oligomere sind weiterhin herstellbar durch Mischen von Q Molen wasserlöslicher Aminoalkylalkoxysilane der allgemeinen Formel I

R - Si (R¹)_{y}(OR^{1*})_{3-y} I

vorzugsweise Aminopropyltriethoxysilan, Aminopropylmethyldiethoxysilan, Aminopropyltrimethoxysilan oder Aminopropylmethyldimethoxysilan,
mit M Molen nicht wasserlöslicher Alkylalkoxysilane der allgemeinen Formel IIb

R³ - Si (OR^{1**})₃ IIb

wobei R eine aminofunktionelle organische Gruppe ist,
R¹, R^{1*} und R^{1**} einen Methyl- oder Ethyl-Rest und
R³ einen linearen-oder cyclischen oder verzweigten Alkylrest mit 1 bis 6 C-Atomen oder eine Ureido-Alkylgruppe der allgemeinen Formel IV

NH₂ - CO - NH - (CH₂)_{b} IV

mit 1 <= b <= 6, vorzugsweise b = 3,
darstellt und
0 <= y <= 1 ist,
in dem molaren Verhältnis 0 < M/Q <= 2,
Versetzen des Gemisches mit Wasser, Einstellen des pH-Wertes der Reaktionsmischung auf einen Wert zwischen 1 und 8 und Entfernen des bereits vorhandenen und/oder bei der Umsetzung entstandenen Alkohols.

Ferner sind Siloxan-Oligomere erhältlich durch Mischen wasserlöslicher Organosilane der allgemeinen Formel V

H₂N(CH₂)_{f} (NH)_{g} (CH₂)ᵢ - Si(CH₃)ₕ(OR⁰)₃₋ₕ V

worin 0 <= f <= 6, g = 0 falls f = 0, g = 1 falls f > 1,0 <= i <= 6, 0 <= h <= 1 und R⁰ eine Methyl-, Ethyl-, Propyl- oder Isopropyl-Gruppe sind, vorzugsweise Aminopropyltriethoxysilan,
mit wasserlöslichen, jedoch in wässrigem Medium nicht stabilen Organosilanen der allgemeine Formel VI 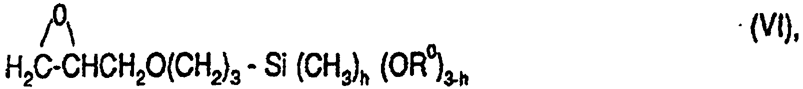 worin 0 <= h <= 1 ist und R⁰ einen Methyl-, Ethyl-, Propyl- oder Isopropyl-Rest darstellt,
vorzugsweise Glycidyloxypropyltrimethoxysilan,
und/oder der allgemeinen Formel VII

H₂C=CR'-COO(CH₂)₃ - Si(CH₃)ₕ (OR⁰)₃₋ₕ VII

worin 0 <= h <= 1 ist, R⁰ einen Methyl-, Ethyl-, Propyl- oder Isopropyl-Rest und R' einen Methyl- oder Wasserstoff-Rest darstellen,
vorzugsweise Methacryloxypropyltrimethoxysilan,
und ein nicht wasserlösliches Organosilan der allgemeinen Formel VIII

R" -Si (CH₃)ₕ (OR⁰)₃₋ₕ VIII

worin 0 <= h <= 1 ist, R⁰ einen Methyl-, Ethyl-, Propyl- oder Isopropyl-Rest und R" einen linearen, verzweigten oder cyclischen Kohlenwasserstoff-Rest mit 1 bis 18 C-Atomen darstellen,
vorzugsweise Propyltrimethoxysilan,
in dem molaren Verhältnis M = a / (b + c + d),
wobei a die Summe der Molzahlen der Organosilane gemäß Formel V, b die Summe der Molzahlen der Organosilane gemäß Formel VI sowie c die Summe der Molzahlen der Organosilane gemäß Formel VII und d die Summe der Molzahlen der Organosilane gemäß Formel VIII sind, mit 0 <= M <= 3, insbesondere für M gleich 0 mit a gleich 0 und/oder c gleich d gleich 0 und b >= 1 sowie vorzugsweise 0,5 <= M <= 3,

Versetzen des Gemisches mit einem Wasser/Säure-Gemisch, Einstellen des pH-Wertes der Reaktionsmischung auf einen Wert zwischen 1 und 8 und Entfernen des bereits vorhandenen und/oder bei der Umsetzung entstandenen Alkohols.
Bevorzugt gibt man während der destillativen Abtrennung des Alkohols Wasser in dem Maße zu, wie Alkohol bzw. Alkohol/Wasser-Gemisch aus dem Reaktionsmedium entfernt wird. Zum Einstellen des pH-Wertes sind einbasige Säuren besonders geeignet. So hergestellte Produkte setzen auch bei Verdünnen mit Wasser keine weiteren Alkohole durch Hydrolyse frei und weisen einen Flammpunkt von deutlich mehr als 70 °C auf.

Ein Siloxan-Oligomer, das auf die oben beschriebene Art und Weise hergestellt werden kann, ist beispielsweise Dynasylan® HS 2909, ein oligomeres Siloxan der Firma Evonik.

Eine erfindungsgemäße Dünnschichtplatte besteht zumindest aus einer Trägerplatte und einer Sorbensschicht, wobei die Sorbensschicht zumindest ein Siloxan Oligomer, das zumindest Silanolgruppen aufweist, enthält. Sofern die Sorbensschicht keine weiteren Bestandteile enthält, die Auswirkungen auf die Trenneigenschaften haben, so werden die Trenneigenschaften allein von den Trenneigenschaften der Siloxan-Oligomere bestimmt. Diese können beispielsweise Alkylgruppen aufweisen, Aminogruppen, ionische Gruppen etc. Es ist auch möglich, dass sie zwei oder mehrere verschiedene Arten von funktionellen Gruppen aufweisen.

In einer bevorzugten Ausführungsform enthält die Sorbensschicht zusätzlich anorganische und/oder organische Partikel. Beispielsweise können die Partikel aus den folgenden Materialien bestehen:
- SiO₂, z.B. in Form von Kieselgel oder Kieselgur
- Aluminiumoxid
- TiO₂
- Acryl- Methacryl basierte Polymere, z.B. GM/CGDMA glycidylmethacrylat/ethlenglycoldimethacrylat oder HEMA hydroxyethylmetacrylat
- Polysaccharide, z.B. Cellulose, Agarose
- hydrophile Polyvinylether, z.B. BDMVE butandiolmonovinylether oder DVH divinylethlenharnstoff
Bevorzugt enthält die Sorbensschicht der erfindungsgemäßen Dünnschichtplatte SiO₂, beispielsweise in Form von Kieselgur oder besonders bevorzugt in Form von Kieselgel.
Die Partikel haben typischerweise mittlere Teilchengrößen zwischen 2 µm und 100 µm. Bevorzugt liegt der mittlere Teilchendurchmesser zwischen 2 und 40 µm, besonders bevorzugt zwischen 2 und 15 µm. Die Partikel können sphärisch, unregelmäßig geformt oder gebrochen sein. Geeignete Partikel haben beispielsweise Durchmesser zwischen 4 und 8 µm oder zwischen 5 und 20 µm. Beispiele für geeignete Partikel sind Kieselgel 60 (4-8 µm) oder Kieselgel60 (5-20 µm) der Firma Merck KGaA, Deutschland. Weiterhin kann die Sorbensschicht weitere Bestandteile wie Indikatoren oder Reflexionsverstärker enthalten. Ein häufig eingesetzter Indikator ist ein Fluoreszenzindikator, vorzugsweise das bei 254 nm im UV absorbierende Magnesiumwolframat (DE 28 16 574).
Auch die Partikel können mit Separationseffektoren funktionalisiert sein.
In diesem Fall werden die Trenneigenschaften der Sorbensschicht sowohl von den Trenneigenschaften der Siloxan-Oligomere wie auch der Partikel bestimmt.
Die Dicke der Sorbensschicht liegt typischerweise zwischen 1 µm und 5 mm, bevorzugt zwischen 10 µm und 500 µm.
Die Herstellung der erfindungsgemäßen Dünnschichtplatte erfolgt, indem zunächst eine Mischung hergestellt wird, die zumindest das Siloxan-Oligomer, das zumindest Silanolgruppen aufweist, und ein Lösungsmittel enthält. Geeignete Lösungsmittel sind solche, die das Siloxan-Oligomer zumindest teilweise lösen und zudem bei Temperaturen unter 200°C wieder vollständig entfernt werden können. Die Wahl des Lösungsmittels hängt von der Löslichkeit des Siloxan-Oligomers ab. Beispiele geeigneter Lösungsmittel sind Wasser, Alkohole, wie Ethanol oder Methanol, Toluol und n-Heptan oder Mischungen von zwei oder mehreren Lösungsmitteln. Bevorzugt wird als Lösungsmittel Wasser eingesetzt, wenn das Siloxan-Oligomer darin zumindest teilweise löslich ist.
Typischerweise enthalten die Mischungen zwischen 1 und 50 Gewichts% Feststoffanteil, bevorzugt zwischen 10 und 40 Gewichts% Feststoffanteil. Der Feststoffanteil sind alle Bestandteile der Mischung außer dem Lösungsmittel. Bei dem Feststoffanteil kann es sich um reines Siloxan-Oligomer oder Mischungen zwei oder mehrerer Siloxan-Oligomere handeln oder um Mischungen, die zusätzlich zu mindestens einem Siloxan-Oligomer noch Partikel und/oder Indikatoren enthalten. Der Anteil der Siloxan-Oligomere am Feststoffanteil beträgt zwischen 0,1 und 100%, bevorzugt zwischen 1 und 40% (Gewichts%).

Sofern der Sorbensschicht noch weitere Komponenten wie zum Beispiel Partikel, Indikatoren oder andere Stoffe zugesetzt werden sollen, können diese der Mischung, die zumindest das Siloxan-Oligomer und ein Lösungsmittel enthält, zugefügt werden.
Da es jedoch je nach Reaktivität der Siloxan-Oligomere direkt zur Reaktion mit den z.B. Partikeln kommen kann, werden in diesem Fall bevorzugt zwei Vor-Mischungen hergestellt. Eine Vor-Mischung , die zumindest das Siloxan-Oligomer und ein Lösungsmittel enthält und eine Vor-Mischung, die die weiteren Komponenten, z.B. die Partikel in einem Lösungsmittel enthält. Beide Vor-Mischungen werden dann zu der endgültigen Mischung vereint und diese dann auf den Träger aufgebracht. Alternativ werden zunächst alle Komponenten außer dem Siloxan-Oligomer gemischt und dieses erst kurz vor der Auftragung auf den Träger zu der Mischung zugegeben.

Dem Fachmann sind Methoden zur Auftragung einer Sorbensschicht auf Träger zur Herstellung von Dünnschichtplatten bekannt. Geeignete Verfahren sind beispielsweise:
- die Mischung enthaltend Siloxan-Oligomer und ein Lösungsmittel sowie weitere optionale Komponenten wird in die Mitte des Trägers aufgebracht; anschließend wird der Träger um die Achse, die durch die Auftragsstelle geht, und die senkrecht zur Fläche des Trägers ausgerichtet ist, gedreht, sodass ein gleichmäßiger Flüssigkeitsfilm entsteht. Diese Auftragung wird auch Spin-Coating genannt.
- die Mischung enthaltend Organosiloxan-Oligomer und ein Lösungsmittel sowie weitere optionale Komponenten wird auf den Basisträger aufgesprüht.
- Die Auftragung erfolgt mit einer siebdruckähnlichen Technik
- Die Auftragung erfolgt mittels eines Rakels
- Rollenbeschichtung
- Vorhangbeschichtung
- Tauchen
- Druck/Dispenserverfahren wie beispielsweise Inkjet

Weitere Informationen zu Beschichtungsverfahren finden sich in Liquid Film Coating, S.F. Kistler, P.M. Schweizer (Herausgeber), Chapman&Hall, London, 1997 oder Modern Coating and Drying Technology, E.D. Cohen, E.B. Gutoff (Herausgeber), VCH, Weinheim 1992.

Nach der Auftragung wird der beschichtete Träger bevorzugt einer Temperaturbehandlung unterzogen. Dabei wird er typischerweise über einen Zeitraum zwischen 30 und 200 Minuten bei einer Temperatur zwischen 50 und 200 °C gelagert. Diese Temperaturbehandlung kann eingesetzt werden, um eine weitere Vernetzung der Siloxan-Oligomere untereinander oder mit anderen Komponenten, beispielsweise mit den Partikeln zu bewirken. Zudem wird die Dünnschichtplatte dabei getrocknet. In einer bevorzugten Ausführungsform erfolgt die Temperaturbehandlung mittels eines Temperaturgradienten, bei dem über einen Zeitraum von 30 bis 200 Minuten die Temperatur kontinuierlich oder stufenweise auf eine Temperatur zwischen 50 und 200°C, bevorzugt auf eine Temperatur zwischen 100 und 170°C erhöht wird.

Ein beispielhafter Ablauf der Herstellung ist wie folgt:
1. Ansetzen einer Kieselgelsuspension in Wasser mit oder ohne Indikator
2. Evakuieren, um Luftblasen zu entfernen, die bei der Beschichtung Fehlstellen bewirken würden
3. Zugabe des Siloxan-Oligomeren, z.B. Dynasilan (Typ2909 / amino alkyl)
4. Beschichtung
5. Temperaturbehandlung zur Vernetzung und Trocknung
Das erfindungsgemäße Verfahren bietet den Vorteil, dass zumeist auf organische Lösungsmittel verzichtet werden kann, so dass eine explosionsgeschützte Umgebung nicht notwendig ist.

Die Siloxan-Oligomere vernetzen durch Bildung von kovalenten Bindungen. Sofern Partikel mit geeigneten funktionellen Gruppen zugegeben werden, wie beispielsweise Silica-Partikel mit Si-OH Gruppen, wird auch mit diesen Partikeln eine kovalente Vernetzung über Siloxanbrücken / Si-O-Si erzeugt. Dadurch können auch extrem stabile Schichten hergestellt werden, wie auch in Beispiel 2 verdeutlicht wird.

Die erfindungsgemäßen Dünnschichtplatten können weiterhin nachträglich mit Separationseffektoren funktionalisiert werden. Methoden zum Einführen von Separationseffektoren sind dem Fachmann bekannt. Beispielsweise kann dies über entsprechend funktionalisierte Silane oder Siloxan Oligomere erfolgen.

Es wurde gefunden, dass die erfindungsgemäßen Dünnschichtplatten sehr breit modulierbare Trenneigenschaften aufweisen. Zum einen können die Trenneigenschaften durch die funktionellen Gruppen der Siloxan Oligomere beeinflusst werden, wobei auch parallel mehrere verschiedene funktionelle Gruppen vorhanden sein können, die je nach Fließmittel unterschiedliche Trennwirkungen haben können. Sind zusätzlich noch Partikel, wie z.B. Silica-Partikel, vorhanden, können diese weitere Funktionalitäten aufweisen, die die Trenneigenschaften beeinflussen.

Beispielsweise kann insbesondere bei der Verwendung von Siloxan-Oligomeren in Kombination mit porösen Partikeln eine spezielle Funktionalisierung erzeugt werden. Verwendet man Siloxan Oligomere, die größer sind als der mittlere Porendurchmesser der Poren der Partikel, so werden die Poren größtenteils nicht mit Siloxan-Oligomeren belegt. Nur um die Partikel herum bildet sich ein Netzwerk aus Siloxan-Oligomeren, welches die funktionellen Gruppen der Siloxan Oligomere trägt. Die Poren der Partikel dagegen haben eine andere Funktionalisierung.

Beispielsweise ist es auf diese Weise unter Verwendung von reinen nicht funktionalisierten SiO₂ Partikeln und zumindest alkyl, z.B. amino/alkyl funktionalisierten Siloxan-Polymeren möglich, dass bei Verwendung eines unpolaren Fließmittels (Adsorptionssystem / z.B. Toluol) vergleichbare Selektivitäten wie auf reinen Si Schichten erhalten werden aber die Schichtoberfläche stark hydrophoben Charakter hat. Wässrige Tropfen benetzen die Schicht nicht, sondern bleiben als Tropfen darauf stehen. Beispiele für Siloxan-Oligomere, die zur Herstellung von Platten für diese Anwendung geeignet sind, sind solche, die C1 bis C20 Alkylgruppen, wie z.B. Methyl, Ethyl, Propyl und/oder Butyl tragen sowie optional beispielsweise aminofuntkionelle Gruppen.

Die Durchführung einer dünnschichtchromatographischen Trennung einer Probe auf einer erfindungsgemäßen Dünnschichtplatte, das heißt die Entwicklung der Dünnschichtplatte, erfolgt unter bekannten Bedingungen. Geeignete Fließmittel, beispielsweise Acetonitril, Gemische aus Acetonitril und Dichlormethan oder Gemische aus Ethylacetat, Methanol und Ammoniak, sind dem Fachmann bekannt. Der Fachmann ist weiterhin in der Lage, die Fließmittel dem jeweiligen Trennproblem anzupassen.
Nach der Entwicklung wird die Dünnschichtplatte sorgfältig getrocknet, um Rückstände des Fließmittels zu entfernen. Anschließend wird die entwickelte Platte ausgewertet.

Die Auswertung kann mit dem Fachmann bekannten Methoden, beispielsweise optisch oder durch chemische Derivatisierung erfolgen.

In einer bevorzugten Ausführungsform erfolgt die Auswertung der Dünnschichtplatte durch Inkontaktbringen eines auszuwertenden Bereichs der Sorbensschicht mit einem Eluenten und Zuführung des Eluats in eine Auswerteeinrichtung.

In einer bevorzugten Ausführungsform ist die Auswertevorrichtung ein Massenspektrometer.

In einer bevorzugte Ausführungsform, wenn die Trennschicht hydrophob ist, wird ein Elutionsmittel mit ausreichend hohem Wasseranteil verwendet, so dass das Elutionsmittel mit der Pipettenspitze mit der Trennschicht in Kontakt gebracht wird und dort als Tropfen verweilt. Durch den Kontakt mit der Trennschicht wird Probensubstanz aus der Trennschicht gelöst. Nach einer Einwirkzeit von typischerweise 1 bis 10 Sekunden wird das Elutionsmittel mit der darin gelösten Probe wieder von der Pipettenspitze aufgenommen und kann in eine Auswerteeinheit transportiert werden. Das Eluat kann beispielsweise einem Massenspektrometer zugeführt werden, um eine äußerst präzise Auswertung des Dünnschichtchromatogramms zu ermöglichen.

Herkömmliche Si-Schichten können mit der oben beschriebenen wässrigen Elution nicht ausgewertet werden, da wässrige Lösungsmittel-Tropfen direkt in die Sorbensschicht eindringen würden. Dagegen verbleiben bei der Verwendung der erfindungsgemäßen Dünnschichtplatten, die nicht funktionalisierte Silica-Partikel und Siloxan-Oligomere enthalten, die zumindest Alkylgruppen tragen, Tropfen wässriger Lösungsmittel auf der Sorbensschicht, so dass eine Elution möglich ist.

Insbesondere sind die erfindungsgemäßen Dünnschichtplatten daher für einen Einsatz im LESA® Modus von Advion geeignet.

Die erfindungsgemäßen Dünnschichtplatten enthaltend Siloxan-Oligomere haben somit folgende Vorteile:
- Durch die Siloxan-Oligomere, die verschiedene und unterschiedlich kombinierbare funktionelle Gruppen tragen, können die Trenneigenschaften sehr variabel und gegebenenfalls je nach Fließmittel modulierbar eingestellt werden.
- Es werden durch die kovalente Vernetzung sehr stabile Schichten erhalten.
- Durch die Kombination der Partikel mit den Siloxan-Oligomeren können Schichten mit maßgeschneiderter Funktionalisierung erzeugt werden, beispielsweise hydrophile Eigenschaften in den Poren bei hydrophober Schichtoberfläche z.B. für die Anwendung im LESA®-Modus.
Die meisten der üblich eingesetzten Binder (z.B. Polyacrylsäuren) sind wasserlöslich, was zu Problemen bei Verwendung von wässrigen Fließmittlen oder Derivatisierungsreagenzien führen kann. Die erfindungsgemäßen Schichten sind wasserstabil und durch die kovalente Vernetzung nicht eluierbar.

DC-Schichten, die als Binder wasserlösliche organische Polymere (Acrylsäure-Polymere) aufweisen, können bei Anwendungen, bei denen hohe Wassermenge bzw. lange Einwirkzeiten notwendig sind, nur eingeschränkt eingesetzt werden. Die erfindungsgemäßen Schichten dagegen haben diese Einschränkung nicht. Ein Beispiel ist die bioautographische Detektion auf TLC-Platten [Journal of Chromatography A, 1218 (2011) 2684 - 2691]. Dabei wird eine Bakterienkultur auf der TLC Platte gezüchtet, welche auf bestimmte Substanzen reagiert und über Hemmhöfe eine Detektion ermöglicht (z.B. bacillus subitlis zur Detektion von antibiotisch wirkenden Substanzen). Die während der Inkubationszeit notwendige hohe Feuchte führt dabei leicht zu Schichtablösungen bei herkömmlichen Platten mit Polymerbinder. In Beispiel 8 wird gezeigt, wie nach dem beschriebenen Verfahren hergestellte Platten, absolute Wasserstabilität bei voller Wasserbenetzbarkeit aufweisen.
Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### Beispiel 1: Herstellung von TLC Platten nach dem beschriebenen Verfahren mit 30% (Gew%) organofunktionalisiertem Siloxan bezogen auf die Kieselgelmenge

120 g Wasser werden in einem Becherglas vorgelegt. Unter Rühren werden 67 g Kieselgel 60, 5 - 20 µm und 1,3 g manganaktiviertes Zinksilicat zugegeben. Es wird 20 min nachgerührt und anschließend 40 min unter stetigem Schütteln Vakuum angelegt. Es werden 30 ml organofunktionalisiertes Siloxan (Evonik Dynasilan HS2909 / 60% in Wasser) zugegeben und 15 min gerührt. Die Suspension wird mit einem Rakel auf Glasplatten beschichtet und 30 min bei 80°C gefolgt von 30 min 140°C Temperatur behandelt.

### Beispiel 2: Schichtstabilität

Aufgrund kovalenter Bindungen können im Vergleich zum Stand der Technik deutlich stabilere Schichten hergestellt werden. Die Schichtstabilität von Platten nach dem erfindungsgemäßen Verfahren wird im Vergleich zu einer handelsüblichen Platte, mit organischem Binder gemessen. Dazu wird ein mit einem Motor betriebenen Bohrer, der mit einem definierten Anpressdruck auf die Platte gesetzt wird in die Schicht gebohrt, und die Zeit gemessen bis der Bohrer die Glasoberfläche der Trägerplatte erreicht.
Merck Millipore TLC KG 60 F254 Glasplatte mit 250 µm Schichtdicke: 115 s

Platte nach dem beschriebenem Verfahren mit 30 % organofunktionalisiertem Siloxan (Evonik Dynasilan HS2909) mit 230 µm Schichtdicke: 1200s

### Beispiel 3: Direkte Derivatisierung von Zuckern

Auf einer Platte, hergestellt nach dem erfindungsgemäßen Verfahren, mit 6 % organofunktionalisiertem Siloxan Evonik Dynasylan HS2909 / AminoAlkyl-Funktionalisierung) wird ein Gemisch von Zuckern aufgetrennt. Anschließend werden die Zucker durch 5 min Erhitzten auf 150°C auf der Platte mit den Aminogruppen zu fluoreszierenden Verbindungen umgesetzt und damit sichtbar gemacht bzw. derivatisiert (R. Klaus, W. Fischer, and H.E. Hauck, LC-GC, Vol. 13, Num. 10, 816 - 823).

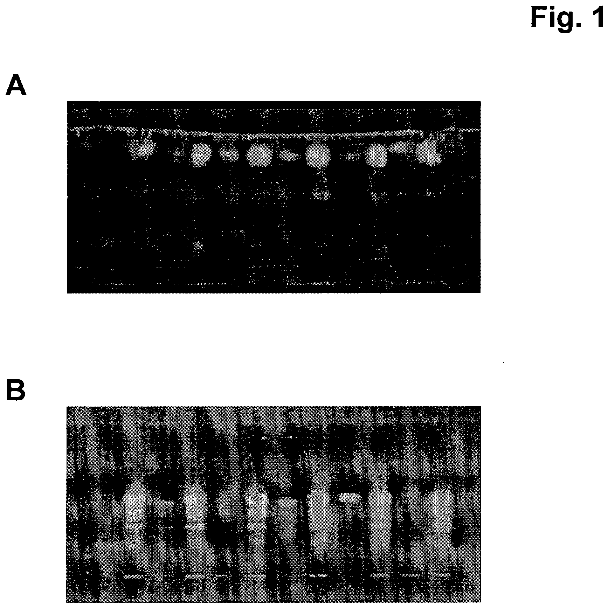

Figur 1 zeigt die entwickelten Dünnschichtplatten. Dünnschichtplatte A wurde nach dem beschriebenen Verfahren hergestellt, Platte B ist eine Merck Millipore HPTLC Si60 NH₂ Platte
Auftragevolmen: 2 µl
Fließmittel: Entwicklung 1: Wasser / ACN (30/70) ; Entwicklung 2: Ethylsacetat / Pyridin / Wasser / Essigsäure / Propionsäure (50/50/10/5/5)
Substanzen:

| Bahn | Substanz | Konzentration | Lösemittel |
|---|---|---|---|
| 1 | D(+)- Galaktose | 0,5 mg/ml | Wasser |
| 3 | Maltosemonohydrat | 0,5 mg/ml | Wasser |
| 5 | D(+)- Arabinose | 0,5 mg/ml | Wasser |
| 7 | D(+)- Glucose | 0,5 mg/ml | Wasser |
| 9 | D(-)- Fructose | 0,5 mg/ml | Wasser |
| 11 | D(-)- Ribose | 0,5 mg/ml | Wasser |
| 2,4,6,8,10,12 | Mischung | 0,5 mg/ml | Wasser |

### Beispiel 4:

Die Tatsache, dass nach der Modellvorstellung eine Funktionalisierung möglich ist, die außen hydrophobe und in den Partikeln hydrophile Eigenschaften ergibt, schafft eine hervorragende **Eignung für LESA®** (liquid extraction surface analysis).

Trennung von Steroiden auf einer nach dem beschriebenen Verfahren hergestellter Platte mit dem Laufmittel Ethylacetat / Toluol (95:5). LESA® Extraktion mit dem NanoMate® von Advion auf der hydrophoben Oberfläche mit Methanol/Wasser (50:50 + 0,1% Ameisensäure) und anschließende Zuführung und Auswertung mit dem Massenspektrometer (Bruker Maxis ™ high resolution mass spectormeter).
Substanzen: Methyltestosteron (obere Bande), Hydrocortison (untere Bande) und Reichstein S (mittlere Bande) in Methanol
Konzentration: 0,2 mg / ml
Auftragevolumen: 500 nl

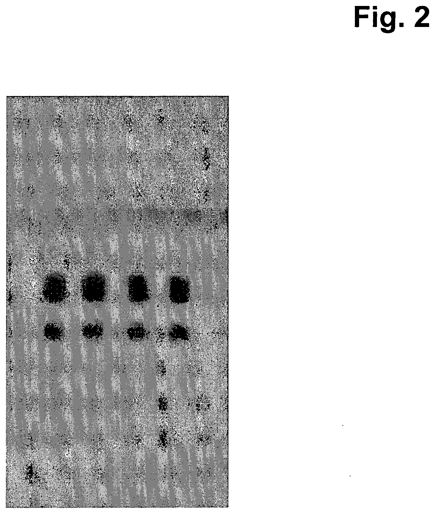

Figur 2 zeigt eine Aufnahme der Dünnschichtplatte bei UV 254 nm

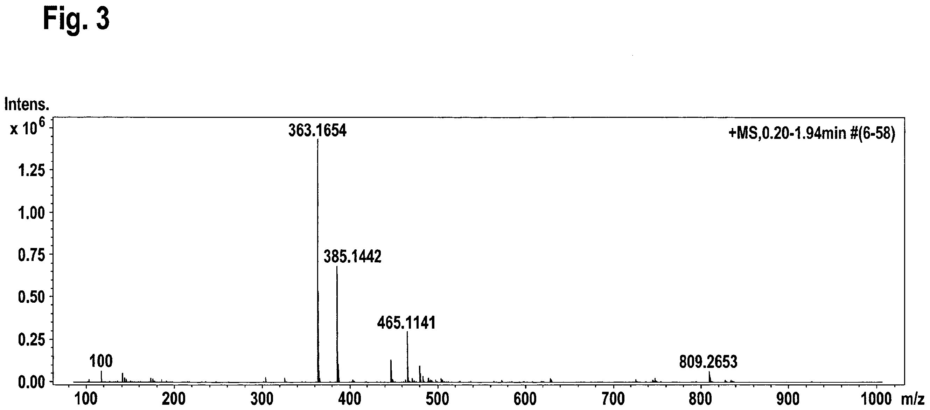

Figur 3 zeigt das MS Spektrum Hydrocortison (untere Bande)

### Beispiel 5:

Anhand der Auftrennung einer Mischung aus drei lipophilen Farbstoffen, entwickelt mit Toluol zeigen wir folgenden Unterschied in der Trennzahl (anhand der Peakbreite in halber Peakhöhe ermittelte theoretisch maximal mögliche Anzahl auftrennbarer Substanzen)
Merck Millipore TLC KG 60 F254 Glasplatte: **Trennzahl 11,2**
Platte nach dem beschriebenem Verfahren mit 6 % organofunktionalisiertem Siloxan Oligomer in Wasser (Evonik Dynasilan HS2909): **Trennzahl 12,4.**
Dies zeigt, dass die erfindungsgemäße DC-Platte eine bessere Trennleistung hat.

### Beispiel 6: Herstellung eines organofunktionalisierten Siloxans zur Herstellung wasserbenetzbarer Schichten.

221 g Aminopropyltriethoxysilan (1 mol) werden vorgelegt und 148,4 g Methyltriethoxysilan (0,8 mol) sowie 54 g Wasser unter Rühren zugetropft und 30 min gerührt. Danach werden weitere 126 g Wasser unter Rühren zugegeben und 15 min gerührt. Anschließend werden 114 g HCl (32%) unter Rühren zugegeben. Nach beendeter Zugabe wird das Reaktionsgemisch mit einem Ölbad (75°C Ölbadtemperatur) erhitzt und bei einem Druck von 135 mbar destilliert bis die Kopftemperatur der Destillationsanlage über 50°C ansteigt. Die bis dahin abdestillierten ca. 250 mL werden als frisches Wasser wieder dem Gemisch zugeführt und weiterdestilliert. Dies wird noch einmal wiederholt und nachdem ca. 220 g abdestilliert sind, wird noch mal die entsprechende Menge frisches Wasser zugegeben und anschließend die Destillation beendet. Die Ausbeute beträgt 695 g,das entspricht einer Konzentration an organofuktionalisiertem Siloxan von 2,9 mol/Liter bzw. 31 % (Gew%).

### Beipiel 7: Herstellung von wasserbenetzbaren Schichten

Herstellung von TLC Platten nach dem beschriebenen Verfahren mit 12% (Gew%) organofunktionalisiertem Siloxan bezogen auf die Kieselgelmenge. 125 g Wasser werden in einem Becherglas vorgelegt. Unter Rühren werden 67 g Kieselgel 60, 5 - 20 µm und 1,3 g manganaktiviertes Zinksilicat zugegeben. Es wird 30 min nachgerührt und anschließend 45 min unter stetigem Schütteln Vakuum angelegt. Es werden 24 ml organofunktionalisiertes Siloxan (aus Beispiel 6) zugegeben und 15 min gerührt. Die Suspension wird mit einem Rakel auf Glasplatten beschichtet und mit einem Temperaturprogramm von 60°C bis 160°C 120 min behandelt.

### Beispiel 8: Wasserstabilität

Um die Wasserstabilität zu testen werden die TLC Platten vollständig in ein mit Wasser gefülltes Gefäß gegeben und gemessen, wann sich die Schicht beginnt abzulösen. Zum Vergleich wird eine handelsübliche TLC KG60 F₂₅₄ Platte von Merck Millipore mit gemessen:
Merck Millipore TLC KG 60 F₂₅₄ Glasplatte: Schichtablösung nach 20 Minuten
Platte hergestellt nach dem beschriebenen Verfahren (aus Beispiel 7): Nach 2 Wochen keine Schichtablösung erkennbar, Versuch wurde nicht weiter fortgeführt.

## Patentansprüche

1. Dünnschichtplatte zumindest bestehend aus einem Träger und einer Sorbensschicht, wobei die Sorbensschicht zumindest ein Siloxan Oligomer enthält, das zumindest Silanolgruppen aufweist.

2. Dünnschichtplatte nach Anspruch 1, **dadurch gekennzeichnet, dass** die Sorbensschicht zusätzlich anorganische und/oder organische Partikel enthält.

3. Dünnschichtplatte nach Anspruch 1 oder 2, **dadurch gekennzeichnet, dass** das Siloxan Oligomer C1 bis C18 Alkyl-Gruppen und/oder Amino-Gruppen aufweist.

4. Dünnschichtplatte nach einem oder mehreren der Ansprüche 1 bis 3, **dadurch gekennzeichnet, dass** das Siloxan Oligomer ein Co- Kondensat aus mindestens einem wasserlöslichen und mindestens einem wasserunlöslichen Silan ist.

5. Dünnschichtplatte nach einem oder mehreren der Ansprüche 1 bis 4, **dadurch gekennzeichnet, dass** die Dicke der Sorbensschicht zwischen 10 und 500 µm liegt.

6. Verfahren zur Herstellung von Dünnschichtplatten durch
a) Bereitstellen einer Mischung, die zumindest ein Siloxan-Oligomer, das zumindest Silanolgruppen aufweist, und ein Lösungsmittel, das das Siloxan-Oligomer zumindest teilweise lösen und bei Temperaturen unter 200°C wieder vollständig entfernt werden kann, enthält
b) Aufbringen der Mischung aus Schritt a) auf einen Träger
c) Temperaturbehandlung

7. Verfahren nach Anspruch 6, **dadurch gekennzeichnet, dass** Schritt a) erfolgt durch
a1) Herstellung einer Suspension von anorganischen und/oder organischen Partikeln in einem Lösungsmittel
a2) Mischen der Suspension aus Schritt a) mit einem Siloxan Oligomer

8. Verfahren nach Anspruch 6 oder 7, **dadurch gekennzeichnet, dass** als Lösungsmittel Wasser verwendet wird.

9. Verfahren nach einem oder mehreren der Ansprüche 6 bis 8, **dadurch gekennzeichnet, dass** die Mischung, die in Schritt b) auf den Träger aufgebracht wird, im Feststoffanteil zwischen 1 und 40 Gewichts% Siloxan-Oligomer und zwischen 60 und 99 Gewichts% SiO₂-Partikel enthält.

10. Verfahren nach einem oder mehreren der Ansprüche 6 bis 9, **dadurch gekennzeichnet, dass** die Temperaturbehandlung mittels eines Temperaturgradienten erfolgt, bei dem über einen Zeitraum von 30 bis 200 Minuten die Temperatur kontinuierlich oder stufenweise auf eine Temperatur zwischen 50 und 200°C erhöht wird.

11. Verfahren zur Durchführung einer dünnschichtchromatographischen Trennung mit folgenden Verfahrensschritten
a) Bereitstellen einer Dünnschichtplatte gemäß einem oder mehreren der Ansprüche 1 bis 5
b) Auftragen der Proben auf die Dünnschichtplatte
c) Entwicklung der Dünnschichtplatte mit einem Laufmittel
d) Entfernung des Laufmittels
e) Auswertung der Dünnschichtplatte

12. Verfahren nach Anspruch 11, **dadurch gekennzeichnet, dass** die Auswertung der Dünnschichtplatte erfolgt durch Inkontaktbringen eines auszuwertenden Bereichs der Sorbensschicht mit einem Eluenten und Zuführung des Eluats in eine Auswerteeinrichtung.

13. Verfahren nach Anspruch 12, **dadurch gekennzeichnet, dass** die Auswerteeinrichtung ein Massenspektrometer ist.

## Claims

1. Thin-layer plate at least consisting of a support and a sorbent layer, where the sorbent layer comprises at least one siloxane oligomer which contains at least silanol groups.

2. Thin-layer plate according to Claim 1, **characterised in that** the sorbent layer additionally comprises inorganic and/or organic particles.

3. Thin-layer plate according to Claim 1 or 2, **characterised in that** the siloxane oligomer contains C1 to C18 alkyl groups and/or amino groups.

4. Thin-layer plate according to one or more of Claims 1 to 3, **characterised in that** the siloxane oligomer is a co-condensate of at least one watersoluble silane and at least one water-insoluble silane.

5. Thin-layer plate according to one or more of Claims 1 to 4, **characterised in that** the thickness of the sorbent layer is between 10 and 500 µm.

6. Process for the production of thin-layer plates by
a) provision of a mixture which comprises at least one siloxane oligomer which contains at least silanol groups and a solvent which is able to at least partially dissolve the siloxane oligomer and can be removed completely again at temperatures below 200°C
b) application of the mixture from step a) to a support
c) temperature treatment.

7. Process according to Claim 6, **characterised in that** step a) is carried out by
a1) provision of a suspension of inorganic and/or organic particles in a solvent
a2) mixing of the suspension from step a) with a siloxane oligomer.

8. Process according to Claim 6 or 7, **characterised in that** the solvent used is water.

9. Process according to one or more of Claims 6 to 8, **characterised in that** the mixture applied to the support in step b) comprises between 1 and 40% by weight of siloxane oligomer and between 60 and 99% by weight of SiO₂ particles in the solids fraction.

10. Process according to one or more of Claims 6 to 9, **characterised in that** the temperature treatment is carried out by means of a temperature gradient in which the temperature is increased continuously or stepwise to a temperature between 50 and 200°C over a period of 30 to 200 minutes.

11. Method for carrying out a thin-layer chromatographic separation having the following method steps:
a) provision of a thin-layer plate according to one or more of Claims 1 to 5
b) application of the samples to the thin-layer plate
c) development of the thin-layer plate using an eluent
d) removal of the eluent
e) evaluation of the thin-layer plate.

12. Method according to Claim 11, **characterised in that** the evaluation of the thin-layer plate is carried out by bringing a sorbent layer area to be evaluated into contact with an eluent and feeding the eluate into an evaluation device.

13. Method according to Claim 12, **characterised in that** the evaluation device is a mass spectrometer.

## Revendications

1. Plaque à couche mince au moins constituée par un support et par une couche de sorbant, dans laquelle la couche de sorbant comprend au moins un oligomère de siloxane qui contient au moins des groupes silanol.

2. Plaque à couche mince selon la revendication 1, **caractérisée en ce que** la couche de sorbant comprend de façon additionnelle des particules inorganiques et/ou organiques.

3. Plaque à couche mince selon la revendication 1 ou 2, **caractérisée en ce que** l'oligomère de siloxane contient des groupes C1 à C18 alkyle et/ou des groupes amino.

4. Plaque à couche mince selon une ou plusieurs des revendications 1 à 3, **caractérisée en ce que** l'oligomère de siloxane est un co-condensat d'au moins un silane soluble à l'eau et d'au moins un silane non soluble à l'eau.

5. Plaque à couche mince selon une ou plusieurs des revendications 1 à 4, **caractérisée en ce que** l'épaisseur de la couche de sorbant est comprise entre 10 et 500 µm.

6. Processus pour la production de plaques à couche mince au moyen de :
a) l'élaboration d'un mélange qui comprend au moins un oligomère de siloxane qui contient au moins des groupes silanol et un solvant qui dispose de la capacité de dissoudre au moins partiellement l'oligomère de siloxane et qui peut être enlevé complètement à nouveau à des températures inférieures à 200°C
b) l'application du mélange issu de l'étape a) sur un support
c) un traitement thermique.

7. Processus selon la revendication 6, **caractérisé en ce que** l'étape a) est mise en oeuvre au moyen de :
a1) l'élaboration d'une suspension de particules inorganiques et/ou organiques dans un solvant
a2) le mélange de la suspension issue de l'étape a) avec un oligomère de siloxane.

8. Processus selon la revendication 6 ou 7, **caractérisé en ce que** le solvant utilisé est de l'eau.

9. Processus selon une ou plusieurs des revendications 6 à 8, **caractérisé en ce que** le mélange appliqué sur le support au niveau de l'étape b) comprend entre 1 et 40% en poids d'oligomère de siloxane et entre 60 et 99% en poids de particules de SiO₂ pour la fraction de solides.

10. Processus selon une ou plusieurs des revendications 6 à 9, **caractérisé en ce que** le traitement thermique est mis en oeuvre au moyen d'un gradient de température selon lequel la température est augmentée en continu ou par pas jusqu'à une température entre 50 et 200°C sur une période de 30 à 200 minutes.

11. Procédé pour mettre en oeuvre une séparation chromatographique sur couche mince comportant les étapes de procédé qui suivent :
a) élaboration d'une plaque à couche mince selon une ou plusieurs des revendications 1 à 5
b) application des échantillons sur la plaque à couche mince
c) développement de la plaque à couche mince en utilisant un éluent
d) enlèvement de l'éluent
e) évaluation de la plaque à couche mince.

12. Procédé selon la revendication 11, **caractérisé en ce que** l'évaluation de la plaque à couche mince est mise en oeuvre en amenant une zone de couche de sorbant destinée à être évaluée en contact avec un éluent et en acheminant l'éluat à l'intérieur d'un dispositif d'évaluation.

13. Procédé selon la revendication 12, **caractérisé en ce que** le dispositif d'évaluation est un spectromètre de masse.
